# EUROPEAN PATENT APPLICATION

(11) **EP 4 520 739 A1**
(43) Date of publication of application: **12.03.2025**
(21) Application number: 23290032.4
(22) Date of filing: 07.09.2023
(51) Int. Cl.: C04B 28/02, C04B 40/00

(54) **METHOD OF SPRAYING AN ULTRA-HIGH PERFORMANCE CONRETE ONTO A SURFACE**

(71) Applicant: Holcim Technology Ltd, 6300 Zug (CH)
(72) Inventor: Halin, Olivier, F-38070 Saint Quentin Fallavier (FR); Blachier, Christian, F-38070 Saint Quentin Fallavier (FR); Jaillet, Cédric, F-38070 Saint Quentin Fallavier (FR); Bonnet, Emmanuel, F-38070 Saint Quentin Fallavier (FR)
(74) Representative: SONN Patentanwälte GmbH & Co KG

(57) **Abstract**

A method of spraying an ultra-high performance concrete onto a surface, comprising:
- providing a fresh ultra-high performance concrete,
- pumping the ultra-high performance concrete to a spray nozzle,
- adding a thickening agent to the ultra-high performance concrete, and
- spraying the ultra-high performance concrete onto the surface.

## Description

The invention refers to a method of spraying an ultra-high performance concrete onto a surface.

Sprayed ultra-high performance concrete (UHPC) is often used to repair infrastructure elements such as tunnels or bridges to extend their life. UHPC has emerged as a promising material for infrastructure repairs due to its exceptional strength and durability. The main advantage of using sprayed UHPC is to reduce the thickness of the repair layer due to its high strength and the fibres incorporated in the concrete.

However, existing UHPC formulations designed for self-levelling applications have limitations when it comes to shotcreting processes. These formulations typically have a low yield stress, which facilitates pumping to the job site, providing a level surface and ease of application. However, when transitioning to shotcreting techniques for repair applications, these UHPC formulations prove inadequate. The shotcreting process requires UHPC with a significant yield stress to ensure proper adhesion to vertical and overhead surfaces and to prevent sagging or slumping during application.

Challenges arise when modifying existing UHPC formulations to meet shotcreting requirements. Without the addition of a fast-setting accelerator in the nozzle, the rheology of the initial fresh concrete must be precisely controlled. Failure to do so can result in undesirable outcomes, such as excessively sticky or fluid concrete, making it unfit for shotcreting. Conversely, the addition of a fast-setting accelerator to the UHPC mix in the spray gun introduces new complications. The correct amount of accelerator required to achieve a concrete that sticks to the surface without sagging can lead to nozzle clogging, uneven spraying and poor surface finish.

Therefore, the main challenge in using traditional UHPC formulation for shotcrete applications is to find a good compromise between an acceptable viscosity and a sufficient yield stress preventing the flow of the sprayed product along the substrate material.

Further, the invention aims at achieving a high early age strength development in order to be able to reopen the tunnel or the bridge quickly. For example, the UHPC shall develop a minimal compressive strength of 3 MPa at 3 hours after being sprayed at temperature of above 10°C. At the same time, the UHPC shall have a workability retention of 1 hour.

In order to solve these and other objects, the invention provides a method of spraying an ultra-high performance concrete onto a surface, comprising:
- providing a fresh ultra-high performance concrete,
- pumping the ultra-high performance concrete to a spray nozzle,
- adding a thickening agent to the ultra-high performance concrete, and
- spraying the ultra-high performance concrete onto the surface.

Thus, the invention is based on the idea to add a thickening agent to the fresh UHPC mix during application, thereby adjusting the rheology of the sprayed material instead of adding an accelerator at the spray nozzle. The thickening agent enhances the yield stress of the UHPC, providing the necessary stiffness for effective shotcreting while ensuring the concrete adheres uniformly to vertical and overhead surfaces. The method eliminates clogging issues and enables a consistent spray pattern, resulting in improved surface finish and overall repair quality. By integrating the thickening agent into the fresh UHPC mix only at the nozzle, pumpability and workability of the concrete are maintained for prolonged times, such as for up to one hour.

Preferably, the addition of the thickening agent to the ultra-high performance concrete is carried out so that the ultra-high performance concrete, when being sprayed, has an increased yield stress before setting occurs when compared to the ultra-high performance concrete during the pumping step.

Therefore, the increase in yield stress that is achieved by the invention is independent from the setting process of the ultra-high performance concrete. As used herein, a thickening agent is understood to refer to an admixture that limits segregation in fresh concrete or mortar, i.e. the separation of the concrete constituents as a function of their respective densities and weight by improving cohesion. The thickening agent can therefore be a viscosity modifying admixture as defined in European Standard EN-934-2 of August 2012, or a colloidal dispersion. According to the present invention, the thickening agent is not a shotcrete accelerating agent that decreases setting times, such as aluminium sulphate solutions, which are commonly used when in sprayed concrete applications.

The expression "before setting occurs" is understood to refer to the initial setting time as defined in standard EN 196-3. According to the needle penetration test method disclosed in said standard, the beginning of the setting process ("initial setting") is identified, when the concrete paste - due to its stiffness - exerts a predefined resistance to a test needle that is penetrating into the paste. In particular, the initial setting time is the time period between the time water is added to the cement and the time at which a 1 mm square section needle fails to penetrate the cement paste, placed in the Vicat's mold 5 mm to 7 mm from the bottom of the mold.

Due to the yield strength increasing effect brought about by the thickening agent, the addition of a setting accelerator at the nozzle is preferably excluded. A setting accelerator is understood to be an admixture that is added in order to reduce the initial setting time as defined in the European Standard EN-934-2 of August 2012.

Preferably, the thickening agent is added in the form of a colloidal dispersion of mineral particles dispersed in a liquid. Adding the thickening agent in the form of a colloidal dispersion considerably prevents aggregation of the solid mineral particles and enhances their dispersibility into the ultra-high performance concrete. The colloidal nature of the thickening agent ensures a highly uniform distribution of mineral particles within the UHPC matrix, leading to improved packing density and homogeneity. Additionally, the colloidal nature of the dispersion enables the rapid and effective alteration of the concrete's yield stress at the spray nozzle.

Shotcrete accelerating agents used in the prior art have the drawback to cause an acidic environment when added to cement, which, in some cases, has the potential to generate the release of hazardous substances. This is in particular the case, when the cement comprises sulphur containing minerals, such as ground granulated blast furnace slag or concrete demolition waste, where the acidic admixtures cause the formation of H₂S gas. This has limited the choice of hydraulic binders to cement types that only contain little or no sulphur. By using an inorganic thickening agent in the form of a colloidal dispersion the formation of an acidic environment and the release of hazardous substances, such as H₂S, when in contact with the UHPC is prevented. In this way, a wide range of hydraulic UHPCs may be used for shotcreting, including composite cements that contain sulphur.

The thickening agent added to the ultra-high performance concrete preferably has a pH of at least 7, which prevents the formation of hazardous substances when the two components are mixed together.

Preferably, water is used as a dispersion medium of the colloidal dispersion.

The mineral particles preferably have a particle size distribution characterised by a D10 of ≥ 2 nm, preferably ≥ 5 nm, and a D90 of ≤ 200 nm, preferably ≤ 100 nm. D10 refers to the 10^{th} percentile of the particle size distribution by volume of the particle size, i.e. 10% of the volume is formed by particles having a size that is below the D10 diameter. Analogously, D90 refers to the 90^{th} percentile of the particle size distribution by volume of the particle size, i.e., 90% of the volume is formed by particles having a size that is below the D90 diameter. The particle size distribution is measured by Dynamic Light Scattering according to the standard ISO-22412-2017. The values are determined in volume and computed from the particle size distribution (in volume) of the colloidal suspension.

Preferably, the mineral particles have a specific surface area of 20 - 500 m²/g, preferably 100-500 m²/g. The specific surface area refers to the BET specific surface area that is measured according to the standard ISO 9277:2010.

As to the nature of the colloidal dispersion, a preferred embodiment provides that the colloidal dispersion has a solid content of 10-55 wt.-%, preferably 20-55 wt.-%. The solid content is measured by drying the colloidal dispersion at 105°C for 24 hours, and measuring and calculating the weight loss prior and after the drying stage. The solid content of the colloidal dispersion comprises or consists of the mineral particles mentioned above. Preferably, the solid content of the colloidal dispersion does not contain any components other than the mineral particles that bring about the thickening effect upon addition to the ultra-high performance concrete.

As to the nature of the mineral particles, a preferred embodiment provides that the thickening agent comprises at least one member selected from the group consisting of amorphous silica, fumed aluminium oxide and phyllosilicate clay. A colloidal dispersion of silica is for example commercialised by Sigma-Aldrich under the LUDOX^{®} range of products. The phyllosilicate may be a clay, such as a natural clay, including sepiolite, attapulgite, bentonite, montmorillonite, hectorite, saponite, smectite, kaolinite and wollastonite, or a synthetic clay, such as Laponite^{®} supplied by Byk Additives Limited.

The amount of the colloidal dispersion added to the ultra-high performance concrete depends i.a. on the type of mineral particles, the desired yield strength development and the solid content of the dispersion. In particular, the higher the solid content of the colloidal dispersion is, the less mass of thickening agent needs to be added to the ultra-high performance concrete.

According to a preferred embodiment, the thickening agent is amorphous silica and/or fumed aluminium oxide and is added to the ultra-high performance concrete in an amount of 6-20 g/L, preferably 8-18 g/L, even more preferably 10-12 g/L, defined as weight of the solid content of the thickening agent per volume of the ultra-high performance concrete.

The amount of thickening agent added to the ultra-high performance concrete is preferably selected such that the sprayed concrete, when sprayed onto a vertical surface, does not sag or slip on the surface.

In many cases, in particular for infrastructure repair and maintenance applications, sprayed ultra-high performance concrete needs to have high early age strength development in order to be able to reopen the infrastructure, such as a tunnel or a bridge, quickly. Therefore, the ultra-high performance concrete preferably has an early compressive strength of > 2 MPa, preferably > 3 MPa after 3 hours after being sprayed at temperature of above 10°C.

An early strength development is preferably obtained without damaging the fresh properties of the sprayed concrete, in particular its ability to be easily sprayed and have a good surface finishing, in that the fresh ultra-high performance concrete comprises an accelerator, preferably calcium silicate hydrate (CSH) crystallisation seeds, a sodium salt or a calcium salt. The accelerator is present in the initial fresh ultra-high performance concrete that is pumped to the spray nozzle and is not added to the concrete at the spray nozzle.

In an embodiment, the fresh ultra-high performance concrete comprises the accelerator in an amount of 5-50 g/L, preferably 15-25 g/L, defined as weight of the accelerator per volume of the ultra-high performance concrete.

Ultra-high performance concrete is characterised by its extremely high strength, high density, low porosity, and a fine and densely packed microstructure. Ultra-high performance concrete generally has a resistance to compression at 28 days greater than 120 MPa and preferably greater than 150 MPa, measured according to EN 12390-3:2019. The concrete used in the instant invention preferably is a ultra-high performance concrete as described in WO 2015/193419 A1.

The ultra-high performance concrete preferably comprises, in parts by mass with respect to the cement:
- 100 parts of cement the particles of which have a Blaine value comprised from 3500 cm²/g to 10000 cm²/g;
- 32 to 42 parts of water;
- 5 to 50 parts of a mineral addition A1 the particles of which have a D50 less than or equal to 6 µm and selected from silica fume, metakaolin, slag, pozzolans or mixtures thereof;
- 90 to 230 parts of sand the particles of which have a D50 greater than or equal to 50 µm and a D90 less than or equal to 3 mm;
- a superplasticizer.

According to first variant of such a ultra-high performance concrete, the concrete, in relative parts by mass with respect to the cement, may comprise:
- 100 parts of cement the particles of which have a Blaine finesse of 3500-10000 cm²/g;
- 38 to 42 parts of water;
- 8 to 20 parts of a mineral addition A1 the particles of which have a D50 less than or equal to 6 µm and selected from silica fume, metakaolin, slag, pozzolans or mixtures thereof;
- 90 to 180 parts of sand the particles of which have a D50 comprised from 100 um to 400 µm and a D90 less than or equal to 800 µm;
- a superplasticizer.

According to another variant, the ultra-high performance concrete, in relative parts by mass with respect to the cement, may comprise:
- 100 parts of cement the particles of which have a Blaine finesse of 3500-10000 cm²/g;
- 32 to 42 parts of water;
- 5 to 50 parts of a mineral addition A1 the particles of which have a D50 less than or equal to 6 µm and selected from silica fume, metakaolin, slag, pozzolans or mixtures thereof;
- 90 to 230 parts of sand the particles of which have a D50 greater than or equal to 50 µm and a D90 less than or equal to 3 mm;
- a superplasticizer; and
- a viscosity-modifying agent.

The D50 corresponds to the 50th centile of the volume distribution of particle sizes, i.e. 50% of the volume consists of particles for which the size is less than D50 and 50% with a size greater than D50. The D50 of particles is generally determined by laser diffraction. The particle size distribution of the different powders are obtained with a laser Malvern MS2000 granulometer. The measurement is carried out in a suitable medium (for example, in an aqueous medium); the size of the particles should be comprised between 0.02 µm and 2 mm. The light source consists of a red He-Ne laser (632 nm) and a blue diode (466 nm). The optical model is the Fraunhofer one, the computation matrix is of the polydisperse type.

A measurement of background noise is first of all carried out with a pump rate of 2,000 rpm, a stirring rate of 800 rpm and a measurement of noise over 10 s, in the absence of ultrasonic waves. It is then checked that the light intensity of the laser is at least equal to 80%, and that a decreasing exponential curve is obtained for the background noise. If this is not the case, the lenses of the cell have to be cleaned.

A first measurement is then carried out on the sample with the following parameters: pump rate of 2,000 rpm, stirring rate of 800 rpm, absence of ultrasonic waves, obscuration limit between 10 and 20%. The sample is introduced in order to have an obscuration slightly greater than 10%. After stabilisation of the obscuration, the measurement is carried out with a duration between the immersion and the measurement set to 10 s. The measurement duration is of 30 s (30,000 analysed diffraction images). In the obtained granulogram, the fact that a portion of the population of the powder may be agglomerated should be taken into account.

Next, a second measurement (without emptying the tank) is then carried out with ultrasonic waves. The pump rate is brought to 2,500 rpm, the stirring to 1,000 rpm, the ultrasonic waves are 100 % emitted (30 Watts). This rate is maintained for 3 minutes, and then one returns to the initial parameters: pump rate 2,000 rpm, stirrer rate of 800 rpm, absence of ultrasonic waves. After 10 s (for removing the possible air bubbles), a measurement is made for 30 s (30000 analysed images). This second measurement corresponds to a powder de-agglomerated by ultrasonic dispersion.

Each measurement is repeated at least twice in order to check the stability of the result. The apparatus is calibrated before each working session by means of a standard sample (silica C10 Sifraco) the grain size curve of which is known. All the measurements shown in the description and the announced ranges correspond to the values obtained with ultrasonic waves.

The cements suitable for use in the ultra-high performance concrete are generally Portland cements for which the Blaine finesse is of 3500-10000 cm²/g, preferably 4500-10000 cm²/g. The Blaine finesse is measured according to NF EN 196-6 of December 2018.

The preferred Portland cements are those defined in European standard NF EN 197-1 of April 2012, more preferably they are CEM I cements.

Preferably, the cement is a cement for which the Blaine specific surface area is greater than or equal to 6050 cm²/g, preferably greater than or equal to 6100 cm²/g.

Preferably, the ultra-high performance concrete comprises from 28 to 42 parts of water, preferably from 30 to 40 parts water expressed in relative parts by mass with respect to the cement.

Preferably, the ultra-high performance concrete comprises from 6 to 40 parts of A1, more preferably from 7 to 30 parts of A1, further preferably from 8 to 25 parts of A1, expressed in relative parts by mass with respect to the cement.

Preferably, A1 is an addition the particles of which have a D50 less than or equal to 6 um, preferably less than or equal 2 um.

Preferably, the ultra-high performance concrete comprises from 90 to 210 parts of sand, more preferably from 90 to 180 parts of sand expressed in relative parts by mass with respect to the cement.

Preferably, the ultra-high performance concrete comprises sand the particles of which have a D10 comprised from 150 µm to 400 µm.

Preferably, the ultra-high performance concrete comprises sand the particles of which have a D50 comprised from 100 to 500 µm, more preferably comprised from 100 to 400 µm.

Preferably, the ultra-high performance concrete comprises sand the particles of which have a D90 less than or equal 2 mm, more preferably a D90 comprised from 200 µm to 1 mm, further preferably a D90 comprised from 200 um to 600 µm.

Preferably, the sand of the ultra-high performance concrete is a siliceous sand, a calcined or non-calcined bauxite sand, a silica-calcareous sand or mixtures thereof.

Preferably the ultra-high performance concrete further comprises from 0 to 300 parts, preferably 10 to 50, of a mineral addition A2, differing from A1, the particles of which have a D50 comprised from 1 µm to 80 um, preferably 1 µm to 80 µm, expressed in relative parts by mass with respect to the cement.

Preferably, A2 has no pozzolanic activity. By pozzolanic activity in the meaning of the invention is meant a material capable of forming a compound having hydraulic properties when mixed at ordinary temperature of 20° C. with lime or a lime-releasing material. Therefore, in the meaning of the invention, by a material not having pozzolanic activity is meant a material not capable of forming a compound having hydraulic properties when mixed at an ordinary temperature of 20° C with lime or a lime-releasing material.

For example, materials not having pozzolanic activity are materials containing calcium carbonate (e.g. ground or precipitated calcium carbonate), preferably ground calcium carbonate. The ground calcium carbonate may be Durcal^{®} 1 for example (OMYA, France). Materials not having pozzolanic activity may be ground quartz e.g. C6 which is a substantially non-pozzolanic silica filler material supplied by Sibelco, France. The preferred BET specific surface area (determined using known methods described below) of ground calcium carbonate or quartz is 2-10 m²/g, generally less than 8 m²/g, for example 4 to 7 m²/g, preferably less than about 6 m²/g. Precipitated calcium carbonate is also suitable as material not having pozzolanic activity. The individual particles generally have a size (called primary size) in the order of 20 nm. The individual particles agglomerate to aggregates having a size (called secondary size) from 0.1 to 1 µm. The aggregates having a (secondary) size from 0.1 to 1 µm may themselves form aggregates of size (called ternary size) larger than 1 µm.

A single material not having pozzolanic activity, or a mixture of materials not having pozzolanic activity may be used in the ultra-high performance concrete, for example ground calcium carbonate, ground quartz or precipitated calcium carbonate or a mixture thereof.

The mineral addition A2 is generally a finely divided mineral material used in the ultra-high performance concrete (e.g. concrete) or hydraulic binders (e.g. cement) to improve certain properties or to impart particular properties thereto. For example, the mineral additions A2 are calcined shales (for example as defined in the NF EN 197-1 standard, paragraph 5.2.5), mineral additions comprising calcium carbonate, e.g. limestone (for example as defined in the NF EN 197-1 standard, paragraph 5.2.6), mineral additions comprising silica, e.g. siliceous fines or mixtures thereof.

Preferably the mineral addition A2 is a limestone filler.

Preferably, the ultra-high performance concrete further comprises from 0 to 10 parts of anhydrous calcium sulphate expressed in relative parts by mass with respect to the cement.

Anhydrous calcium sulphate may be found in the natural state. It is also possible to use an anhydrous calcium sulphate which is a by-product of certain industrial processes.

Preferably, when the fineness of the cement increases, it is also possible to increase the amount of anhydrous calcium sulphate in order to maintain equivalent mechanical strengths. One skilled in the art will know from his/her knowledge how to optimise the amount of anhydrous calcium sulphate by using known methods. This optimization is a function of the fineness of the cement particles. For example, one skilled in the art could add 2.5 parts of anhydrous calcium sulphate for a cement the particles of which have a BET specific surface area of 1.7 m²/g, expressed in relative parts by mass with respect to the cement. According to another example, one skilled in the art could add 4.5 parts of anhydrous calcium sulphate for a cement the particles of which have a BET specific surface area of 1.85 m²/g, expressed in relative parts by mass with respect to the cement.

Preferably, the ultra-high performance concrete further comprises mineral fibres (e.g. glass, basalt), organic fibres, metal fibres (e.g. steel) or a mixture thereof.

The organic fibres may notably be selected from polyvinyl alcohol (PVA) fibres, poly-acrylonitrile (PAN) fibres, high density polyethylene (HDPE) fibres, polyamide or polyimide fibres, polypropylene fibres, aramid fibres or carbon fibres. Mixtures of these fibres may also be used.

These organic fibres may appear as an object either consisting of single strand or multiple strands, the diameter of the object ranging from 25 µm to 800 um. The individual length of the organic fibres is preferably comprised between 10 and 50 mm.

The recourse to mixtures of fibres having different characteristics allows the properties of the concrete to be adapted to the desired characteristics.

The quantity by volume of fibres is generally from 0.5 to 8% relative to the volume of the hardened concrete. The quantity of metal fibres, expressed in terms of volume of the final hardened concrete is generally less than 4%, for example from 0.5 to 3.5%, preferably approximately 3%. The quantity of organic fibres, expressed on the same basis, is generally from 1 to 8%, preferably from 2 to 5%. The metal fibres are generally chosen from the group including steel fibres, such as high strength steel fibres, amorphous steel fibres or stainless steel fibres. The steel fibres may optionally be coated with a non-ferrous metal such as copper, zinc, nickel (or alloys thereof).

The individual length (l) of the metal fibres is generally at least 2 mm and is preferably 10 to 30 mm. The ratio lid (d being the diameter of the fibres) is generally from 10 to 300, preferably from 30 to 300, preferably from 30 to 100.

Preferably, the ultra-high performance concrete further comprises 0.001 to 1.5 parts of a viscosity-modifying agent expressed in relative parts by mass with respect to the cement.

The term "viscosity-modifying agent" such as used in the present invention and accompanying claims is to be construed as including viscosifying agents, thickeners, for agents for modifying the flow limit. It is a water-soluble product which increases the viscosity of the medium to which it is added.

Preferably, the viscosity-modifying agent of the ultra-high performance concrete is selected among:
- polymers of natural origin: starch, plant proteins, alginate, welan gum and all other natural gums (guar gum, xanthan gum, gum Arabic, carob flour, carrageenan, diutan);
- semi-synthetic polymers such as starch derivatives, cellulose ethers such as methylcellulose, ethylcellulose, hydroxymethylcellulose, hydroxypropylcellulose, hydroxyethyl methylcellulose (HEMC), hydroxypropyl methylcellulose (HPMC), hydroxyethyl cellulose (HEC) and carboxymethyl cellulose (CMC);
- synthetic polymers, mainly chiefly latex, polyethers (polyethylene glycol), polyacrylamides, and those that are vinyl based (polyvinyl alcohol). A mixture of these agents may be used.

Preferably, the ultra-high performance concrete further comprises from 0 to 0.5 parts of anti-foaming agent expressed in relative parts by mass with respect to the cement.

Preferably, the ultra-high performance concrete comprises 0.1 to 10 parts of a superplasticizer. More preferably, the ultra-high performance concrete comprises from 0.2 to 5 parts of a superplasticizer.

In particular, it is useful to include a super-plasticizer of polycarboxylate type.

The term "superplasticizer" as used in the present description and in the claims which accompany it is to be understood as including both water reducing agents and superplasticizers as described in the book entitled "Concrete Admixtures Handbook, Properties Science and Technology ", V. S. Ramachandran, Noyes Publications, 1984.

A water reducing agent is defined as an admixture which typically reduces the amount of mixing water by 10 to 15% typically of a concrete for a given workability. The water reducing agents include, for example lignosulfonates, hydroxycarboxylic acids, carbohydrates and other specialised organic compounds, e.g. glycerol, polyvinyl alcohol, sodium alunnino-methyl-siliconate, sulfanilic acid and casein.

The superplasticizers belong to a new class of water reducing agents, chemically different from normal water reducing agents and able to reduce the amounts of water by about 30%. Superplasticizers have been globally classified in four groups: sulfonated condensates of naphthalene formaldehyde (SNF) (generally a sodium salt); sulfonate condensates of melamine formaldehyde (SMF); modified lignosulfonates (MLS); and others. More recent superplasticizers include polycarboxylic compounds such as polycarboxylates, for example polyacrylates. A superplasticizer is preferably a new generation superplasticizer, e.g. a copolymer containing a polyethylene glycol as a grafted chain and carboxylic functions in the main chain like a polycarboxylic ether. Sodium polycarboxylates-polysulphonates and sodium polyacrylates may also be used. The derivatives of phosphonic acid may also be used. The required amount of superplasticizer generally depends on the reactivity of the cement. The lower the reactivity, the smaller is the required amount of superplasticizer. In order to reduce the total amount of alkaline salts, the superplasticizer may be used as a calcium salt rather than as a sodium salt.

According to a preferred embodiment of the invention, the step of spraying the ultra-high performance concrete onto the surface is carried out with compressed air as an atomizing agent. The use of compressed air provides a superior degree of control over the application process, permitting precise and even distribution of the ultra-high performance concrete on the surface. Moreover, the introduction of compressed air enhances the atomization of the ultra-high performance concrete at the nozzle, resulting in smaller concrete particles. These fine particles improve the contact between the ultra-high performance concrete and the surface, thereby enhancing the adhesion and cohesion properties of the concrete.

Preferably, the step of adding a thickening agent to the ultra-high performance concrete comprises injecting the thickening agent into the flow of compressed air. This approach ensures that the thickening agent is homogeneously distributed within the ultra-high performance concrete just prior to its application, optimising the alteration of the concrete's yield stress. Further, this method enables precise control over the amount of thickening agent being added, thereby providing the ability to adjust the yield stress of the ultra-high performance concrete in a controlled manner.

In the following, the invention will be illustrated in more detail by reference to exemplary embodiments.

In the examples, the following materials were used.
- Cement: CEM I 52,5N SR5 PM Le Teil Lafarge.
- Addition 1: Durcal 40 Omya is a limestone supplied by Omya AG, having a particle size distribution characterised by a D98 of 130 µm and a D50 of 30 µm.
- Addition 2: Silica fume Rima is a silica fume supplied by Rima Industrial S.A.
- Microsand: BE 01 Sibelco is a microsand having a particle size range of 0-1 mm.
- fibres: 14/0.2 steel fibres are steel fibres having a length of 14 mm and a diameter of 0.2 mm.
- Admixture 1: Ductal F5 is a superplasticizer supplied by Lafarge France
- Admixture 2: Master X seed 100, supplied by MBCC, is an engineered suspension of crystal seeds containing nanoparticles, accelerating the growth of calcium silicate hydrate crystals.
- Admixture 3: Ductal A3 is a calcium salt based accelerator.
- Admixture 4: Ludox HS 40, supplied by Grace, is an alkaline colloidal nanoscale silica having a solid content of 40 wt.-%, having a particle size of approx. 10 nanometers, a specific surface of 220 m²/g, and a pH of 9.2-9.9.
- Admixture 5: Sigunit L-5601 AF, supplied by Sika AG, is a shotcrete accelerator based on inorganic aluminium complexes.

The rheology ("scissometer value") of the fresh concrete was measured by a Pilcon Hand Vane Tester supplied by Impact Test Equipment. The test is carried out with equipment consisting of a rod with vanes mounted to it that is inserted into the material and rotated at low speed (1 rotation per minutes). A gauge on the top of the rod measures the torque required to cause failure of the material and provides a value to shear strength. The vanes used in the present study are 70 mm diameter 100 mm height. This vane is not calibrated, thus, the value has no unit.

The Compressive strength at 3 hours and at 28 days was measured on samples of hardened concrete of cylindrical shape having a diameter of 7 cm and a height of 14 cm. These sample are drilled into concrete elements sprayed into 60x60x15 cm boxes.

Compressive strength at 3 hours is measured on sample of hardened concrete of cubical shape 10x10x10 cm. These sample are sawn into concrete pieces sprayed into 50x50x15 cm boxes.

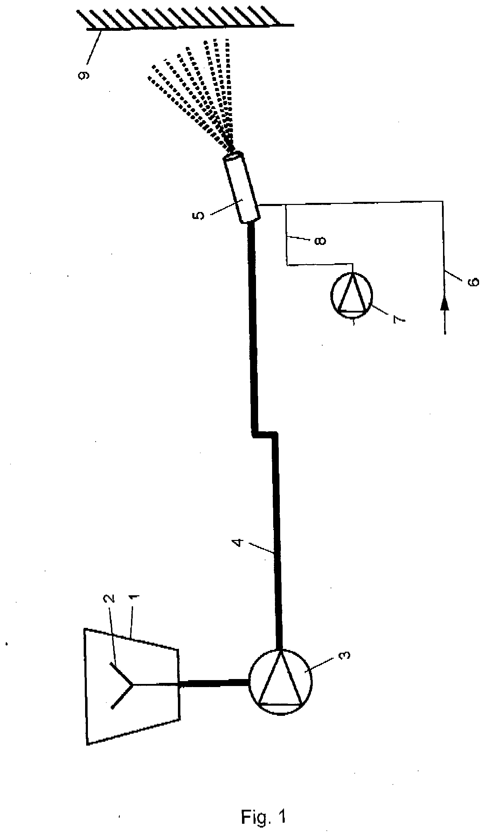

The procedure used in the examples to prepare and apply shotcrete to a surface is described with reference to Fig. 1. The fresh mortar is produced in a concrete mixer 1 comprising a mixing device 2. The fresh concrete was then filled in a concrete pump 3 and pumped through a hose 4 to a spray nozzle 5. Compressed air 6 was supplied to the spray nozzle 5 in order to atomize the fresh concrete. In some examples, an admixture 7 was introduced into the flow of compressed air 6 by means of the admixture pump 8. The concrete was sprayed through the spray nozzle 5 onto a vertical wall 9.

### Example A:

Shotcrete compositions according to reference examples A-1 to A-6 were prepared, with no admixture being added at the spray nozzle. The rheology of the fresh concrete was controlled by varying the amount of Admixture 1, which is a superplasticizer (namely Ductal F5).

| | | **A-1** | **A-2** | **A-3** | **A-4** | **A-5** | **A-6** |
|---|---|---|---|---|---|---|---|
| M o r t a r | Cement (kg/m³) | 656.6 | 656.6 | 656.6 | 656.6 | 656.6 | 656.6 |
| | Addition 1 (kg/m³) | 197 | 197 | 197 | 197 | 197 | 197 |
| | Addition 2 (kg/m³) | 137.9 | 137.9 | 137.9 | 137.9 | 137.9 | 137.9 |
| | Micro Sand (kg/m³) | 952 | 952 | 952 | 952 | 952 | 952 |
| | Fibres (kg/m³) | 253.5 | 253.5 | 253.5 | 253.5 | 253.5 | 253,5 |
| | Admixture 1 (kg/m³) | 8.1 | 9.5 | 10.9 | 11.9 | 13.5 | 14.6 |
| | Admixture 2 (kg/m³) | - | - | - | - | - | - |
| | Admixture 3 (kg/m³) | - | - | - | - | - | - |
| | Water (L/m³) | 220 | 219 | 218 | 217 | 216 | 215 |

| Scissometer value of the mortar (without unity): | | | | | | | |
|---|---|---|---|---|---|---|---|
| | | 50 | 35 | 22 | 16 | 12 | 9 |

| Addition at the nozzle: | | | | | | | |
|---|---|---|---|---|---|---|---|
| | Admixture 4 (kg/m³) | - | - | - | - | - | - |
| | Admixture 5 (kg/m³) | - | - | - | - | - | - |

| Compressive strength at 28 days [MPa] | | | | | | | |
|---|---|---|---|---|---|---|---|
| | | 131 | 142 | 175 | 168 | n/a | n/a |

| Comment regarding shotcreting behavior | | | | | | | |
|---|---|---|---|---|---|---|---|
| | | • high pumping pressure | • jerking spray | • homogene ous spraying | • some sag and slippage on the wall | • massive sag and slippage on the wall | • massive sag and slippage on the wall |
| | | • clogging and inconsiste nt spraying | | • easy to place and finish / trowel | | | |
| | | | | | • Some slippage during trowelling | | |
| | | • hard to trowel | | | | | |

The results of examples A-1 to A-6 show that the initial yield stress (stiffness) of the mortar has to be carefully adjusted in order to obtain the suitable result. Examples A-1 and A-2 are characterised by a high scissometer value that leads to difficulties in the application of the concrete, including low pumping ability, clogging at the nozzle, irregular spraying and poor surface smoothness which results into defaults in the structure of the sprayed concrete, and to relatively low compressive strength values. Examples A-3 and A-4 are characterised by an adapted mortar stiffness that allows constant and efficient spraying and finishing together with the targeted strength of at least 150 MPa. Some slight slippage of material is observed with example A-4. Examples A-5 and A-6 are characterised by a too soft material that led to massive slippage and sag, making the spraying impossible.

### Example B/C

| | | **B-4** | **B-5** | **B-6** | **C-4** | **C-5** | **C-6** |
|---|---|---|---|---|---|---|---|
| M o r t a r | Cement (kg/m³) | 656.6 | 656.6 | 656.6 | 656.6 | 656.6 | 656.6 |
| | Addition 1 (kg/m³) | 197 | 197 | 197 | 197 | 197 | 197 |
| | Addition 2 (kg/m³) | 137.9 | 137.9 | 137.9 | 137.9 | 137.9 | 137.9 |
| | Micro Sand (kg/m³) | 952 | 952 | 952 | 952 | 952 | 952 |
| | fibres (kg/m³) | 253.5 | 253.5 | 253.5 | 253.5 | 253.5 | 253.5 |
| | Admixture 1 (kg/m³) | 11.9 | 13.5 | 14.9 | 11.9 | 13.5 | 15 |
| | Admixture 2 (kg/m³) | | | | | | |
| | Admixture 3 (kg/m³) | | | | | | |
| | Water (L/m³) | | | | | | |

| Scissometer value of the mortar (without unity): | | | | | | | |
|---|---|---|---|---|---|---|---|
| | | 16 | 12 | 8 | 16 | 12 | 8 |

| Addition at the nozzle: | | | | | | | |
|---|---|---|---|---|---|---|---|
| | Admixture 4 | 18 | 24 | 38 | - | - | - |
| | Admixture 5 | - | - | - | 12 | 18 | 30 |

| Compressive strength at 28 days [MPa] | | | | | | | |
|---|---|---|---|---|---|---|---|
| | | 178 | 172 | 169 | 168 | 153 | 141 |

| Comment regarding shotcreting behavior | | | | | | | |
|---|---|---|---|---|---|---|---|
| | | • homoge neous spraying | • homoge neous spraying | • homoge neous spraying | • homoge neous spraying | • trend of jerking spray + clogging after stop | • jerking spray + clogging |
| | | • easy to trowel | • easy to trowel | • easy to trowel | • difficult to trowel | | • impossib le to trowel |
| | | | | | | • hard to trowel I bad finishing | |

Examples B-4, B-5, B-6, C-4, C-5 and C-6 were conducted in order to examine the spraying ability of the mortar with addition into the spray nozzle of two different types of admixtures. In examples B-4, B-5 and B-6, an alkaline colloidal nanoscale silica (Ludox HS 40) was added to the concrete at the spray nozzle according to the invention, whereas in examples C-4, C-5 and C-6 a standard shotcrete accelerator based on inorganic aluminium complexes (Sigunit L-5601 AF) was added to the concrete at the spray nozzle. These examples aim at demonstrating that the addition of a specific admixture (thickening agent, i.e. a colloidal silica) into the nozzle allows to obtain a sprayable mortar even when using a fluid mortar (examples B-4 to B-6).

Examples C-4, C-5 and C-6 show that the use of a classic shotcrete addition, acting by a fast setting of the material, leads to (i) clogging in the nozzle, (ii) impossibility to have a finishing of the surface and (iii) inconsistent spraying with clogging. At one point (example C-6), excessive addition of secondary admixture damaged the compressive strength due to default into the sample.

Examples B-4 to B-6 according to the invention show that the use of a thickening agent allows to obtain a sprayable mortar that sticks to the wall even using very fluid mortar. Contrary to the examples C-4, C-5 and C-6, the sprayable mortar (i) keeps its workability after spraying and allows an easy surface finishing, (ii) prevents nozzle clogging and (iii) does not impact the compressive strength even at high dosage.

### Example D

| | | **D-1** | **D-2** | **D-3** | **D-4** |
|---|---|---|---|---|---|
| M o r t a r | Cement (kg/m³) | 656.6 | 656.6 | 656.6 | 656.6 |
| | Addition 1 (kg/m³) | 197 | 197 | 197 | 197 |
| | Addition 2 (kg/m³) | 137.9 | 137.9 | 137.9 | 137.9 |
| | Micro Sand (kg/m³) | 952 | 952 | 952 | 952 |
| | Fibres (kg/m³) | 253.5 | 253.5 | 253.5 | 253.5 |
| | Admixture 1 (kg/m³) | 11.9 | 11.5 | 10.3 | 13.5 |
| | Admixture 2 (kg/m³) | - | 17.2 | 21 | - |
| | Admixture 3 (kg/m³) | - | - | - | 18.1 |
| | Water (L/m³) | 217 | 210 | 206 | 203 |

| Scissometer value of the mortar (without unity): | | | | | |
|---|---|---|---|---|---|
| | | 14 | 12 | 14 | 14 |

| Addition at the nozzle: | | | | | |
|---|---|---|---|---|---|
| | Admixture 4 | 21 | 23 | 25 | 23 |
| | Admixture 5 | - | - | - | - |

| Compressive strength at 3 hours [MPa] | | | | | |
|---|---|---|---|---|---|
| | | 0 | 2.4 | 3.6 | 4.2 |

| Compressive strength at 28 days [MPa] | | | | | |
|---|---|---|---|---|---|
| | | 172 | 177 | 168 | 173 |
| | | • homogeneous spraying | • homogeneous spraying | • homogeneous spraying | • homogeneous spraying |
| | | • easy to trowel | • easy to trowel | • easy to trowel | • easy to trowel |

Examples D-1, D-2, D-3 and D-4 exhibit the spraying ability of accelerated mortars by addition of a secondary admixture into the nozzle. A secondary liquid admixture (colloidal silica suspension) is added into the spray nozzle according to the invention. The amount of the admixture added into the spray nozzle is set to obtain a mortar that sticks to the wall without sagging. Obviously, the more fluid the mortar, the higher the dosage of the secondary admixture.

Examples D-1, D-2, D-3 and D-4 aims a demonstrating that the secondary admixture only acts as a thickener and not as an setting accelerator, since no compressive strength are recorded after 3 hours (Example D-1). Nevertheless, the secondary admixture can be used with accelerated mortar in order to obtain early age strength.

Examples D-2 and D-3 are obtained by the addition of a colloidal silica suspension as secondary admixture into the spray to a mortar containing and an accelerator based on CSH seeds (Master X seed 100). An early strength development is obtained on these two mixes (compressive strength at 3 hours of > 2 MPa), without damaging the fresh properties of the sprayed material, i.e. the ability to be easily sprayed and to have a good surface finishing. Example D-4 is obtained by addition of a colloidal silica suspension as secondary admixture into the spray nozzle to a mortar containing a calcium salt based accelerator (Ductal A3). Here also, the sprayed mortar keep its fresh properties, i.e. spraying ability and finishing, and presents a sufficient early age strength development.

## Claims

1. A method of spraying an ultra-high performance concrete onto a surface, comprising:
- providing a fresh ultra-high performance concrete,
- pumping the ultra-high performance concrete to a spray nozzle,
- adding a thickening agent to the ultra-high performance concrete, and
- spraying the ultra-high performance concrete onto the surface.

2. Method according to claim 1, wherein the thickening agent is added in the form of a colloidal dispersion of mineral particles dispersed in a liquid.

3. Method according to claim 2, wherein the mineral particles have a particle size distribution **characterised by** a D10 of ≥ 2 nm, preferably ≥ 5 nm, and a D90 of ≤ 200 nm, preferably ≤ 100 nm.

4. Method according to claim 2 or 3, wherein the mineral particles have a BET specific surface area of 20-500 m²/g, measured according to the standard ISO 9277:2010.

5. Method according to claim 2, 3 or 4, wherein the colloidal dispersion has a solid content of 10-55 wt.-%.

6. Method according to any one of claims 1 to 5, wherein the thickening agent comprises at least one member selected from the group consisting of amorphous silica, fumed aluminium oxide and phyllosilicate clay.

7. Method according to any one of claims 1 to 6, wherein the thickening agent is amorphous silica, phyllosilicate clay, fumed aluminium oxide, or mixtures thereof, and is added to the ultra-high performance concrete in an amount of 6-20 g/L, preferably 8-15 g/L, defined as weight of the solid content of the thickening agent per volume of the ultra-high performance concrete.

8. Method according to any one of claims 1 to 7, wherein the addition of the thickening agent to the ultra-high performance concrete is carried out so that the ultra-high performance concrete, when being sprayed, has an increased yield stress before setting occurs when compared to the ultra-high performance concrete during the pumping step.

9. Method according to any one of claims 1 to 8, wherein the fresh ultra-high performance concrete comprises an accelerator, preferably calcium silicate hydrate (CSH) crystallization seeds, a sodium salt or a calcium salt.

10. Method according to any one of claims 1 to 9, wherein the ultra-high performance concrete has a 28d compressive strength of > 120 MPa, measured according to EN 12390-3:2019.

11. Method according to any one of claims 1 to 10, wherein the ultra-high performance concrete comprises metal fibres and/or organic fibres and/or glass fibres

12. Method according to any one of claims 1 to 11, wherein the ultra-high performance concrete comprises a water/cement ratio of ≤ 0.50, preferably ≤ 0.42, preferably 0.28 to 0.38.

13. Method according to any one of claims 1 to 12, wherein the ultra-high performance concrete comprises, in parts by mass with respect to the cement:
- 100 parts of cement the particles of which a Blaine fineness comprised from 3500 cm²/g to 10000 cm²/g;
- 32 to 42 parts of water;
- 5 to 50 parts of a mineral addition A1 the particles of which have a D50 less than or equal to 6 µm and selected from silica fume, metakaolin, slag, pozzolans or mixtures thereof;
- 90 to 230 parts of sand the particles of which have a D50 greater than or equal to 50 µm and a D90 less than or equal to 3 mm;
- a superplasticizer.

14. Method according to any one of claims 1 to 14, wherein the step of spraying the ultra-high performance concrete onto the surface is carried out with compressed gas, preferably compressed air, as atomizing agent.

15. Method according to claim 14, wherein the step of adding a thickening agent to the ultra-high performance concrete comprises injecting the thickening agent into the flow of compressed gas.
